(19) Europäisches Patentamt
European Patent Office
Office européen des brevets

(11) **EP 4 428 525 A1**

(12) **EUROPEAN PATENT APPLICATION**
published in accordance with Art. 153(4) EPC


(43) Date of publication:
**11.09.2024 Bulletin 2024/37**

(21) Application number: **22890037.9**

(22) Date of filing: **04.11.2022**

(51) International Patent Classification (IPC):
***G01N 21/552*** *(2014.01)* ***G01N 19/04*** *(2006.01)*
***G01N 21/88*** *(2006.01)*

(52) Cooperative Patent Classification (CPC):
**G01N 19/04; G01N 21/552; G01N 21/88**

(86) International application number:
**PCT/JP2022/041248**

(87) International publication number:
**WO 2023/080217 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 JP 2021181510**



(71) Applicant: **Yokogawa Electric Corporation**
**Tokyo 180-8750 (JP)**

(72) Inventor: **OKADA Syuhei**
**Musashino-shi, Tokyo 180-8750 (JP)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**


(54) **MEASUREMENT DEVICE AND MEASUREMENT METHOD**


(57) A measurement apparatus (20) includes a controller (13) that outputs an electromagnetic wave from an electromagnetic wave output source (7) toward a sample (30) that has a first layer (31) and a second layer (32) adjacent to each other and is subjected to vibration at a predetermined vibration frequency, receives a reflected wave of the electromagnetic wave from a measurement target portion (35) at an interface between the first layer (31) and the second layer (32), calculate a frequency or an amplitude of vibration of the measurement target portion (35) based on the reflected wave, and measure an adhesive strength of the measurement target portion (35) based on the frequency or the amplitude of vibration of the measurement target portion (35) calculated based on the reflected wave.


*FIG. 1*

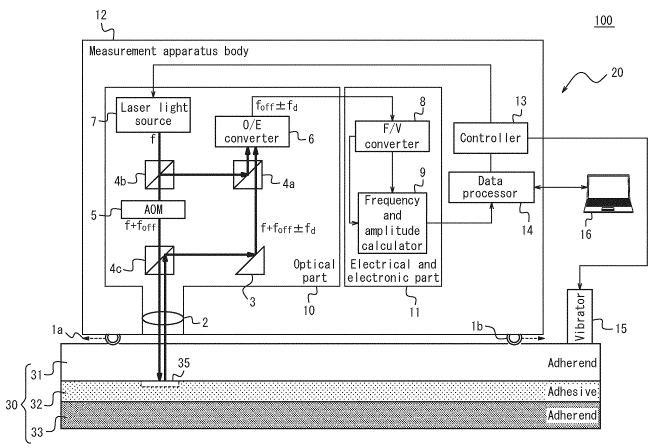


EP 4 428 525 A1

## Description

CROSS-REFERENCE TO RELATED APPLICATION

The present application claims priority to Japanese Patent Application No. 2021-181510 filed on November 5, 2021, the entire contents of which are incorporated herein by reference.

TECHNICAL FIELD

The present disclosure relates to a measurement apparatus and a measurement method.

BACKGROUND

Non-destructive testing refers to a testing technique to examine the state of defects or deterioration inside or on the surface of a sample without destroying the sample. Patent Literature (PTL) 1 describes a technique for nondestructive testing to determine the adhesive strength between layers of a multilayer sample.

CITATION LIST

Patent Literature

PTL 1: JP 5684819 B2

SUMMARY

(Technical Problem)

Conventional configurations have room for improvement, however, in the measurement accuracy of the adhesive strength between layers.

It is an aim of the present disclosure to provide a measurement apparatus and a measurement method capable of improving the measurement accuracy of the adhesive strength between layers.

(Solution to Problem)

A measurement apparatus according to several embodiments includes a controller configured to output an electromagnetic wave from an electromagnetic wave output source toward a sample that has a first layer and a second layer adj acent to each other and is subj ected to vibration at a predetermined vibration frequency, receive a reflected wave of the electromagnetic wave from a measurement target portion at an interface between the first layer and the second layer, calculate a frequency or an amplitude of vibration of the measurement target portion based on the reflected wave, and measure an adhesive strength of the measurement target portion based on the frequency or the amplitude of vibration of the measurement target portion calculated based on the reflected wave. In this way, the measurement apparatus can measure the adhesive strength between layers with high accuracy, since the adhesive strength is measured by acquiring the frequency or amplitude of vibration of the measurement target portion while the degree of the adhesive strength at the interface is brought to light by the vibration.

In the measurement apparatus according to an embodiment, the controller is configured to measure the adhesive strength of the measurement target portion based on a frequency spectrum of the vibration of the measurement target portion in a frequency band that includes a different frequency than the vibration frequency. In this way, the measurement apparatus can measure the adhesive strength of the measurement target portion with even higher accuracy by referring to the frequency spectrum of the vibration of the measurement target portion in a frequency band that includes a different frequency than the vibration frequency of the sample.

In the measurement apparatus according to an embodiment, the controller is configured to calculate the frequency or the amplitude of vibration of the measurement target portion by performing a Doppler measurement of the reflected wave. The measurement apparatus can reduce the effect of background noise by using Doppler measurement and can measure the adhesive strength of the measurement target portion with even higher accuracy.

In the measurement apparatus according to an embodiment, the controller is configured to cause a p-polarized laser from a laser light source to be outputted toward the sample at Brewster's angle as the electromagnetic wave. This can exclude the effect of reflected waves from the surface of the sample, and the measurement apparatus can measure the adhesive strength of the measurement target portion with even higher accuracy.

In the measurement apparatus according to an embodiment, the controller is configured to output the electromagnetic wave toward the sample subjected to vibration at a first vibration frequency as the predetermined vibration frequency and calculate a first frequency or a first amplitude, which is the frequency or the amplitude of vibration of the measurement target portion, based on the reflected wave of the electromagnetic wave from the measurement target portion of the sample subjected to vibration at the first vibration frequency, output the electromagnetic wave toward the sample subjected to vibration at a second vibration frequency as the predetermined vibration frequency and calculate a second frequency or a second amplitude, which is the frequency or the amplitude of vibration of the measurement target portion, based on the reflected wave of the electromagnetic wave from the measurement target portion of the sample subjected to vibration at the second vibration frequency, and measure the adhesive strength of the measurement target portion based on at least one of the first frequency and the second frequency, and the first amplitude and the second amplitude. In this way, the measurement apparatus may use the total of the frequency or amplitude of the reflected wave from the sample subjected to vibration at the first vibration frequency and the frequency or amplitude of the reflected wave from the sample subjected to vibration at the second vibration frequency. The measurement apparatus can therefore measure the adhesive strength of the measurement target portion with even higher accuracy.

In the measurement apparatus according to an embodiment, there are a plurality of measurement target portions at the interface between the first layer and the second layer, and the controller is configured to output an electromagnetic wave toward each measurement target portion in a plurality of measurement target portions at the interface between the first layer and the second layer, receive a reflected wave of the electromagnetic wave from each measurement target portion in the plurality of measurement target portions, analyze, for each measurement target portion in the plurality of measurement target portions, the reflected wave from the measurement target portion to calculate a frequency or an amplitude of vibration of the measurement target portion, and measure, for each measurement target portion in the plurality of measurement target portions, an adhesive strength of the measurement target portion based on a comparison between the frequency or the amplitude of vibration of the measurement target portion and an average value of the frequency or the amplitude of vibration of the plurality of measurement target portions. In this way, the measurement apparatus measures the frequency or amplitude of vibration of the plurality of measurement target portions and measures the adhesive strength of a certain measurement target portion based on a comparison with the frequency or the amplitude of vibration of the plurality of measurement target portions. The measurement apparatus can thereby further increase the measurement accuracy.

In the measurement apparatus according to an embodiment, the controller is configured to output an electromagnetic wave of a first frequency from a first electromagnetic wave output source toward the sample, the second layer of the sample being provided with an additive that increases reflectance of the electromagnetic wave of the first frequency. This enables the measurement apparatus to receive reflected waves with high reflection intensity from the second layer and to measure, with even higher accuracy, the adhesive strength of the measurement target portion located at the interface between the first layer and the second layer.

In the measurement apparatus according to an embodiment, the controller is configured to output an electromagnetic wave of a second frequency from a second electromagnetic wave output source toward the sample, the sample further including a third layer that is adjacent to the second layer and is provided with an additive that increases reflectance of the electromagnetic wave of the second frequency, receive a reflected wave of the electromagnetic wave of the second frequency from a measurement target portion at an interface between the second layer and the third layer, calculate a frequency or an amplitude of vibration of the measurement target portion at the interface between the second layer and the third layer based on the reflected wave of the second frequency, and measure an adhesive strength of the measurement target portion at the interface between the second layer and the third layer based on the frequency or the amplitude of vibration of the measurement target portion at the interface between the second layer and the third layer. This enables the measurement apparatus to receive reflected waves with high reflection intensity from the third layer and to measure, with even higher accuracy, the adhesive strength of the measurement target portion located at the interface between the second layer and the third layer.

In the measurement apparatus according to an embodiment, the controller is configured to output, from a third electromagnetic wave output source, an electromagnetic wave of a third frequency that is reflected by a specific foreign object, and determine that the specific foreign object is present in the sample in response to reception of a reflected wave of the electromagnetic wave of the third frequency from the sample. The measurement apparatus can therefore determine whether a foreign object is present in the sample.

A measurement method according to several embodiments is a measurement method of a measurement apparatus, the measurement method including outputting, by a controller, an electromagnetic wave from an electromagnetic wave output source toward a sample that has a first layer and a second layer adjacent to each other and is subjected to vibration at a predetermined vibration frequency, receiving, by the controller, a reflected wave of the electromagnetic wave from a measurement target portion at an interface between the first layer and the second layer, calculating, by the controller, a frequency or an amplitude of vibration of the measurement target portion based on the reflected wave, and measuring, by the controller, an adhesive strength of the measurement target portion based on the frequency or the amplitude of vibration of the measurement target portion calculated based on the reflected wave. In this way, the measurement method can measure the adhesive strength between layers with high accuracy, since the adhesive strength is measured by acquiring the frequency or amplitude of vibration of the measurement target portion while the degree of the adhesive strength at the interface is brought to light by the vibration.

(Advantageous Effect)

According to an embodiment of the present disclosure, the measurement accuracy of the adhesive strength between layers can be improved.

BRIEF DESCRIPTION OF THE DRAWINGS

In the accompanying drawings:

FIG. 1 is a diagram illustrating the schematic configuration of a measurement system including a measurement apparatus according to one embodiment;
FIG. 2 is a flowchart illustrating an example of measurement procedures using the measurement apparatus in FIG. 1;
FIG. 3 is a diagram schematically illustrating the output of a laser, from the measurement apparatus in FIG. 1, at Brewster's angle toward a sample;
FIG. 4A is a diagram schematically illustrating reflection of a laser from a sample containing an adherend provided with an additive;
FIG. 4B is a diagram schematically illustrating reflection of a laser from a sample containing an adherend provided with an additive; and
FIG. 4C is a diagram schematically illustrating reflection of a laser from a sample containing an adherend provided with an additive.

DETAILED DESCRIPTION

<Comparative Example>

A system according to a Comparative Example described in PTL 1 outputs electromagnetic radiation toward a multilayer sample and analyzes the electromagnetic radiation reflected by or transmitted through the sample to determine the adhesive strength between the layers of the multilayer sample. The system according to the Comparative Example includes a transmitter that outputs electromagnetic radiation toward a sample, a receiver that receives electromagnetic radiation reflected by or transmitted through the sample, and a data collection device. The system according to the Comparative Example determines the adhesive strength between the first layer and the second layer based on the waveform of the electromagnetic radiation reflected by or transmitted through the sample.

However, since the system according to the Comparative Example outputs electromagnetic radiation from the outside toward a stationary sample and determines the adhesive strength based on the waveform of the reflected electromagnetic radiation and the like, it is difficult to accurately distinguish between the cases in which the first layer and second layer are weakly and strongly adhered to each other. Therefore, the system according to the Comparative Example has difficulty in measuring the adhesive strength between the layers of a sample with high accuracy. To address this issue, the present disclosure describes a measurement apparatus and a measurement method capable of measuring the adhesive strength between layers with high accuracy.

<Embodiments>

(First Embodiment)

Embodiments of the present disclosure are now described with reference to the drawings. Portions having an identical configuration or function in the drawings are labeled with the same reference signs. In the explanation of the embodiments, a redundant description of identical portions may be omitted or simplified as appropriate.

The measurement apparatus according to the present embodiment irradiates electromagnetic waves toward a sample, as a measurement target consisting of multiple layers, while vibrating the sample. From the reflected wave, the measurement apparatus detects the frequency, amplitude, and the like regarding the vibration of the interface at a measurement point and measures the adhesive strength at the interface of the adherend. In this way, the measurement apparatus according to the present embodiment measures the adhesive strength according to the characteristics of the vibration at the measurement point as detected from the reflected wave from the vibrating sample. The measurement apparatus can thereby measure the adhesive strength between layers with high accuracy.

FIG. 1 is a diagram illustrating a schematic configuration of a measurement system 100 that includes a measurement apparatus 20 according to an embodiment. The measurement system 100 includes the measurement apparatus 20 and a terminal apparatus 16. The measurement system 100 measures the adhesive strength between layers in a sample 30 composed of a plurality of plate-shaped layers. In the example in FIG. 1, the sample 30 includes an adherend 33 as a third layer, an adhesive 32 as a second layer, and an adherend 31 as a first layer, stacked in this order from the bottom to the top of the page. The adherends 31, 33 are resins having the shape of plates adhered to each other by the adhesive 32 provided in between. The adherends 31, 33 may, for example, be made of polypropylene or polyethylene. The material of the adhesive 32 may be any material that adheres the adherends 31, 33, such as a water-based adhesive, a solvent-based adhesive, a chemical reaction-based adhesive, or a hot-melt adhesive. In the example described below, the surfaces of the adherends 31, 33 and adhesive 32 all have a planar shape extending in the horizontal direction, and the adherend 33, adhesive 32, and adherend 31 are stacked in this order from the bottom to the top in the vertical direction, but the shape and arrangement of the sample 30 are not limited to this example. For example, the surfaces of the adherends 31, 33 and the adhesive 32 may be curved. The surface of at least one of the adherends 31, 33 and the adhesive 32 may be arranged to have a certain inclination with respect to the horizontal plane. The sample 30 may, for example, be an aircraft chassis or a wall surface of a building.

The measurement apparatus 20 includes a measurement apparatus body 12 and a vibrator 15. In the example in FIG. 1, the measurement apparatus body 12 and the vibrator 15 are placed on the surface of the adherend 31. The measurement apparatus body 12 is arranged vertically above the measurement target portion 35 in the sample 30, irradiates electromagnetic waves toward the sample 30, and analyzes the reflected waves from the sample 30 to measure the adhesive strength at the measurement target portion 35. The measurement target portion 35 is within the range of the adhesive 32 between the adherends 31, 33.

The vibrator 15 is an apparatus that applies vibration to the sample 30 when the measurement apparatus body 12 transmits and receives electromagnetic waves. The vibrator 15 may, for example, apply vibration to the sample 30 by outputting sound waves, including ultrasonic waves. Specifically, the vibrator 15 may, for example, vibrate the sample 30 by outputting sound waves using a phased array or by ablation of the material by a laser. Although FIG. 1 illustrates an example of applying vibration to the sample 30 by contacting the adherend 31, which is the surface irradiated by the laser, the vibrator 15 may apply vibration to the sample 30 from any location. For example, the vibrator 15 may apply vibration to the sample 30 from the adherend 33 located on the opposite side from the irradiated surface, or from the side of the sample 30. Alternatively, the vibrator 15 may vibrate only a specific portion of the sample, such as by using a phased array or the like to scan, in the depth direction, the position where the measurement target portion 35 is located. Although FIG. 1 illustrates one vibrator 15 applying vibration to the sample 30, a plurality of vibrators 15 may apply vibration to the sample 30.

The measurement apparatus body 12 is equipped with movable parts 1 (1a, 1b), an optical part 10, an electrical and electronic part 11, a controller 13, and a data processor 14. The movable parts 1 (1a, 1b) include any movable structure that can improve the portability of the measurement apparatus body 12. For example, the movable parts 1 (1a, 1b) may include a tire attached to the measurement apparatus body 12. The measurement apparatus body 12 can be moved over the surface of the adherend 31 by tires or the like forming the movable parts 1 (1a, 1b). The movable parts 1 (1a, 1b) move the measurement apparatus body 12 to enable scanning of the irradiation position of the electromagnetic waves toward the sample 30.

The optical part 10 irradiates electromagnetic waves toward the sample 30, receives reflected waves from the sample 30, and outputs the reflected waves as an electric signal to the electrical and electronic part 11. As an example, the optical part 10 is described below as including an optical system for measuring the frequency, amplitude, and the like of vibration at the measurement target portion 35 by optical Doppler measurement, but the method for measuring the frequency, amplitude, and the like of vibration is not limited to this case. For example, the measurement apparatus 20 may simply measure the frequency, amplitude, and the like of the vibration from the phase displacement of the reflected waves in a case in which the amplitude of the vibration at the measurement target portion 35 is greater than a predetermined value, or a case in which the frequency of the vibration is greater than a predetermined value. The optical part 10 includes a lens 2, a mirror 3, beam splitters 4 (4a, 4b, 4c), an acousto-optical element (acousto-optics modulator, hereinafter "AOM") 5, a photoelectric (optical signal/electrical signal, hereinafter "O/E") converter 6, and a laser light source 7.

In the optical part 10, the laser light source 7 as an electromagnetic wave output source outputs a laser as an electromagnetic wave. The laser light source 7 may be configured by a light-emitting device capable of outputting a laser in a frequency band closer to the frequency band that is highly transmissive with respect to the resin forming the adherend 31. The bandwidth of the laser may, for example, be approximately 0.1 THz to 10 THz or may be microwaves, millimeter waves, or terahertz waves. Hereafter, the frequency of the laser outputted by the laser light source 7 is denoted as f. The signal wave of the laser outputted by the laser light source 7 acts as a carrier wave to transmit information indicating the vibration of the measurement target portion 35 due to the vibrator 15.

The laser outputted from the laser light source 7 is split in two at the beam splitter 4b. One of the lasers split in two at the beam splitter 4b is guided to the AOM 5, and the other laser is guided to the beam splitter 4a. The beam splitters 4 (4a, 4b, 4c) may, for example, be one-way mirrors.

The AOM 5 displaces the frequency f of the laser inputted through the beam splitter 4b to a frequency $f + f_{off}$. The offset frequency $f_{off}$ is selected from a range of values such that a laser with frequency $f + f_{off}$ passes through the resin forming the adherend 31. The laser with the frequency displaced in the AOM 5 is guided to the beam splitter 4c.

The laser inputted from the AOM 5 to the beam splitter 4c passes through the beam splitter 4c, is focused by the lens 2, and is incident on the adherend 31. The laser incident on the adherend 31 passes through the adherend 31 and is reflected at the measurement target portion 35 in the adhesive 32. Since the sample 30 is subjected to vibration by the vibrator 15, the reflected wave contains a frequency component of $f + f_{off} \pm f_d$, which reflects the vibration of the measurement target portion 35. Here, fa is the change in frequency of the laser displaced by the vibration of the measurement target portion 35 and is equivalent to the vibration frequency of the measurement target portion 35. The reflected wave reflected at the measurement target portion 35 is focused by the lens 2 and is incident on the beam splitter 4c. In the example in FIG. 1, the lens 2 focuses both the laser as the incident wave irradiated toward the sample 30 and the reflected wave from the sample 30, but separate lenses may be provided respectively for the incident wave and the reflected wave.

The reflected wave incident on the beam splitter 4c is reflected at the beam splitter 4c and guided to the mirror 3. The mirror 3 reflects the inputted reflected wave and guides the reflected wave to the beam splitter 4a. The reflected wave that contains the frequency component of f + $f_{off}$ $\pm$ $f_d$ and is guided to the beam splitter 4a passes through the beam splitter 4a and is guided to the O/E converter 6. On the other hand, the laser of frequency f guided from the beam splitter 4b to the beam splitter 4a is reflected at the beam splitter 4a and guided to the O/E converter 6.

The O/E converter 6 converts the inputted optical signal to a photoelectric signal and outputs a current signal. Since the polarity of the laser outputted from the laser light source 7 is inverted upon reflection by the measurement target portion 35, the frequency f component of the reflected wave, which contains the frequency components of f + $f_{off}$ $\pm$ $f_d$, and the frequency f component of the laser cancel each other out in the O/E converter 6. Therefore, the O/E converter 6 outputs a current signal representing the frequency $f_{off}$ $\pm$ $f_d$. In the present embodiment, the optical part 10 thus provokes interference between the reflected light, which is subjected to a frequency shift by the vibration of the AOM 5 and the sample 30, and the laser as a reference light outputted from the laser light source 7. The optical part 10 thereby detects a signal pertaining to the vibration of the sample 30 by a heterodyne method. The detection of signals pertaining to the vibration of the sample 30 is not limited to such a heterodyne method. For example, instead of the AOM 5, the mirror 3 may be vibrated at a frequency $f_{off}$ so that the reflected wave from the measurement target portion 35 includes a frequency component varied by $f_{off}$. The O/E converter 6 outputs a current signal including a frequency component of $f_{off}$ $\pm$ $f_d$ to the electrical and electronic part 11.

The electrical and electronic part 11 analyzes the current signal of frequency $f_{off}$ $\pm$ $f_d$ inputted from the O/E converter 6 of the optical part 10 to calculate the frequency and amplitude of the vibration at the measurement target portion 35. The electrical and electronic part 11 includes an F/V (Frequency/Voltage) converter 8 and a frequency and amplitude calculator 9. The F/V converter 8 outputs a voltage signal corresponding to the frequency $f_{off}$ $\pm$ $f_d$ of the current signal inputted from the O/E converter 6 to the frequency and amplitude calculator 9. The frequency and amplitude calculator 9 calculates the frequency, amplitude, and the like of the vibration at the measurement target portion 35 from the voltage signal inputted from the F/V converter 8.

Specifically, the frequency and amplitude calculator 9 can measure $\Delta\nu$ by performing frequency modulation (FM) on the current i outputted from the O/E converter 6, calculating the frequency $f_{off}$ + $\Delta\nu$ of the current i, and obtaining the difference from the known offset frequency $f_{off}$. Here, letting t be time, $V_0$ be the amplitude of the speed of the measurement target portion 35 that is vibrating, and $\lambda$ be the wavelength of the light source, $\Delta\nu$ is indicated by Mathematical Expression 1.

[Mathematical Expression 1]

$$\Delta\nu = {4\pi f_d V_0 \cos 2\pi f_d t}/{\lambda}$$

As mentioned above, the change in frequency $f_d$ is identical to the frequency of the vibration of the measurement target portion 35. Therefore, the frequency and amplitude calculator 9 can determine the frequency $f_d$ of the vibration of the measurement target portion 35 based on the frequency of $\Delta\nu$. Furthermore, since the change in frequency $\Delta\nu$ is proportional to the moving speed of the measurement target portion 35, the frequency and amplitude calculator 9 can calculate the amplitude of the measurement target portion 35 by integrating $\Delta\nu$.

From a plurality of points on the surface of the adherend 31, the measurement apparatus 20 measures the frequency, amplitude, and the like of the vibration in the measurement target portion 35 directly below the points and analyzes the measured data. The data processor 14 of the measurement apparatus body 12 is an arithmetic unit that performs arithmetic processing of such data.

The controller 13 controls the operation of each component of the measurement apparatus 20. For example, the controller 13 may control the operations related to the irradiation of the laser by the laser light source 7, vibration of the vibrator 15, and analysis of the measurement data by the data processor 14. The measurement apparatus 20 may be capable of specifying in advance the range over which the measurement apparatus body 12 scans the adherend 31 in order to measure the frequency, amplitude, and the like of the vibration at a plurality of measurement target portions 35 corresponding to a plurality of points. In the case in which such a scanning range is specified, the controller 13 may control the operation of the movable parts 1 (1a, 1b) to move the measurement apparatus body 12 to each point where measurement is to be performed and may measure the frequency, amplitude, and the like of vibration at the measurement target portion 35 corresponding to each point. The controller 13 includes one or more processors. The "processor" in an embodiment is a general-purpose processor or a dedicated processor specialized for particular processing, but these examples are not limiting. The functions of the measurement apparatus 20 may be achieved by a processor included in the controller 13 executing a program that can be used to cause the measurement system 100 according to the present embodiment to function.

The terminal apparatus 16 is an information processing apparatus that accepts instruction input from a user regarding the operation of the measurement apparatus 20. The terminal apparatus 16 may be achieved by a general-purpose apparatus, such as a personal computer (PC), tablet, or smartphone, or by a dedicated apparatus. Upon receiving an instruction input from the user, the terminal apparatus 16 issues a measurement execution command corresponding to the content of the instruction input and outputs the command to the data processor 14 of the measurement apparatus 20. The data processor 14 outputs the inputted measurement execution command to the controller 13. The controller 13 controls the operation of each component of the measurement apparatus 20, including setting, starting, and stopping the laser light source 7 and the vibrator 15, according to the measurement execution command.

Next, details of the operation of the measurement apparatus 20 are described with reference to FIG. 2. FIG. 2 is a flowchart illustrating an example of measurement procedures using the measurement apparatus 20 in FIG. 1. FIG. 2 illustrates an example of an operational procedure for measuring adhesive strength by switching the vibration frequency of the vibrator 15 among a plurality of values at each of a plurality of measurement points on the adherend 31 and detecting the frequency, amplitude, and the like of the vibration at the measurement target portion 35 for each vibration frequency. For example, the measurement apparatus 20 may measure the adhesive strength by detecting the frequency, amplitude, and the like of the vibration at the measurement target portion 35 in the case of applying vibration at each of the frequencies of 10 kHz, 15 kHz, and 20 kHz at each of a predetermined plurality of measurement points. The range of such vibration frequencies may, for example, be determined according to the difference between the modulus of elasticity of the material (for example, the adherends 31, 33) and the modulus of elasticity of the adhesive 32. The operation of the measurement apparatus 20 described with reference to FIG. 2 corresponds to one measurement method according to the present embodiment. The operation of each step in FIG. 2 is performed based on control by the controller 13. A program for causing a computer to execute the measurement method according to the present embodiment may include each of the steps illustrated in FIG. 2.

In step S1, the controller 13 controls the laser light source 7 to output a laser.

In step S2, the controller 13 sets the frequency of the vibrator 15 to a preset initial value. For example, the controller 13 may set 10 kHz as the initial value of the frequency of the vibrator 15.

In step S3, the controller 13 initiates the output of vibration by the vibrator 15 according to the set vibration frequency.

In step S4, the controller 13 measures the reflected wave, from the sample 30, of the laser that was outputted from the laser light source 7 and whose frequency was displaced in the AOM 5 to calculate the frequency, amplitude, and the like of the vibration at the measurement target portion 35. For example, as mentioned above, the controller 13 may calculate the frequency, amplitude, and the like of the vibration at the measurement target portion 35 by optical Doppler measurement.

In step S5, the controller 13 transfers data on the calculated frequency, amplitude, and the like of the vibration to the terminal apparatus 16.

In step S6, the controller 13 determines whether the predetermined frequency sweep of the vibrator 15 has been completed at that measurement point. For example, the controller 13 may determine that the sweep has been completed in a case in which measurement based on vibration at 10 kHz, 15 kHz, and 20 kHz frequencies is complete at that measurement point. In a case in which the sweep has been completed (YES in step S6), the controller 13 proceeds to step S8. Otherwise (NO in step S6), the controller 13 proceeds to step S7.

In step S7, the controller 13 updates the frequency of the vibrator 15 to a vibration frequency for which measurement has not yet been performed at that measurement point. After completing the process of step S7, the controller 13 returns to step S3 to continue the process.

In step S8, the controller 13 determines whether all of the surface measurement has been completed, i.e., whether the measurement for each of the predetermined plurality of vibration frequencies has been completed for all of the predetermined measurement points. In a case in which all of the surface measurement has been completed (YES in step S8), the controller 13 proceeds to step S10. Otherwise (NO in step S8), the controller 13 proceeds to step S9.

In step S9, the controller 13 moves the measurement apparatus body 12 to the next measurement point at which measurement has not yet been performed. To move the measurement apparatus body 12, the controller 13 may operate the movable parts 1 (1a, 1b) or may, for example, provide notification via a display of the terminal apparatus 16, by audio output, or the like prompting the user to move the measurement apparatus body 12. After completing the process of step S9, the controller 13 returns to step S2 to continue the process.

In step S10, the controller 13 stops operation of the laser light source 7 and the vibrator 15.

In step S11, the controller 13 analyzes each piece of data obtained by the processes in steps S1 to S9 and measures the adhesive strength at each measurement point. In general, when the sample 30 is subjected to vibration, it is considered that there will be a difference in vibration characteristics, such as the frequency or amplitude, between a measurement target portion 35 that has high adhesive strength and a measurement target portion 35 that has low adhesive strength. For example, in a case in which the adherends 31, 33 are not adhered, the vibration at the interface thereof is expected to be nonlinear vibration different than the vibration of the vibrator 15, due to closings or openings. The controller 13 therefore determines the adhesive strength of a measurement target portion 35 based on the characteristics, such as the frequency or amplitude, of the vibration of the measurement target portion 35. The controller 13 can, for example, determine that the adhesive strength of a certain measurement target portion 35 is weak in a case in which the value of the frequency, amplitude, or the like of the vibration of the measurement target portion 35 is significantly different from the frequency, amplitude, or the like of the vibration of another measurement target portion 35. Specifically, the controller 13 can, for example, acquire the average value and standard deviation σ of the frequency, amplitude, or the like of the vibration of the measurement target portion 35 corresponding to each measurement point and determine that the adhesive strength of a measurement target portion 35 is weak if the value of its frequency, amplitude, or the like is at least a certain value (for example, 2σ) away from the average value. At this time, the controller 13 may mark the measurement target portions 35 whose frequency, amplitude, or other value of vibration is at least a certain value away from the average value for each frequency of the vibrator 15. The controller 13 can then determine that the adhesive strength is weak for a measurement target portion 35 marked for at least one vibration frequency of the vibrator 15. Alternatively, the controller 13 can determine that the adhesive strength is weak for a measurement target portion 35 marked for at least two, or all, vibration frequencies of the vibrator 15.

The measurement apparatus 20 can determine that the adhesive strength of the measurement target portion 35 that vibrates with characteristics that differ significantly from the characteristics of the vibration of the vibrator 15 is weak. For example, the measurement apparatus 20 can determine that the adhesive strength of a measurement target portion 35 for which the difference in frequency or amplitude from the vibration of the vibrator 15 is equal to or greater than a certain value is weak. The measurement apparatus 20 may acquire in advance, and store in a memory apparatus, the relationship between characteristics, such as frequency or amplitude, of the vibration of the measurement target portion 35 and the adhesive strength for each type of sample 30, each measurement environment (including the vibration frequency of the vibrator 15), and the like. In this case, the controller 13 may determine the adhesive strength of the measurement target portion 35 by comparing the measured value of the frequency, amplitude, or the like of vibration of the measurement target portion 35 with the information, stored in the memory apparatus in advance, indicating the relationship between the characteristics and the adhesive strength. The measurement apparatus 20 may, in this case as well, switch the vibration frequency of the vibrator 15 among a plurality of values and detect the frequency and amplitude of the vibration at the measurement target portion 35 for each vibration frequency to further improve the accuracy for determining the adhesive strength. In addition to, or instead of, the frequency and amplitude of the vibration of the measurement target portion 35, the measurement apparatus 20 may use phase information to determine the adhesive strength.

In this way, the controller 13 may acquire a value indicating the adhesive strength at each measurement target portion 35 by, for example, acquiring the difference between a characteristic of vibration at that measurement target portion 35 and a reference vibration characteristic. Such a reference vibration characteristic may, for example, be the average value of a vibration characteristic of other measurement target portions 35, a characteristic of the vibration of the vibrator 15, or a value related to a previously learned characteristic. The measurement target portion 35 for which the difference between the value indicating the adhesive strength and the reference vibration characteristic is at least a certain value (for example, 2σ) may be marked as a portion at which the adhesive strength is weak.

In step S12, the controller 13 displays an image illustrating the measurement results (diagnosis results) on a display of the terminal apparatus 16. For example, the controller 13 may display values indicating the adhesive strength at each measurement point, the marked measurement target portions 35, and the like. After completing the process of step S12, the controller 13 ends the process of the flowchart. Although FIG. 2 illustrates an example of starting the vibration of the vibrator 15 in step S3 after starting the output of the laser in step S1, the measurement apparatus 20 may start the vibration of the vibrator 15 before starting the output of the laser.

As described above, the measurement apparatus 20 vibrates the sample 30 that is the measurement target while irradiating a laser in the microwave, millimeter wave, or terahertz wave band toward the target, thereby transmitting radiation through the adherend 31, and performs Doppler measurement of the reflection from the measurement target portion 35 at the adhesive interface to be observed. This enables highly accurate determination of the adhesive state at the measurement target portion 35. In other words, as in the Comparative Example, it is difficult to determine, in a static state, whether the layers forming the sample 30 are in contact but not adhered. By vibrating the sample 30, the measurement apparatus 20 brings to light the difference between a state of being in contact but not adhered and a state of being in contact and adhered. Closings and openings are generated by vibration, for example, in a case in which the layers forming the sample 30 are in contact but not adhered. This results in complex vibration behavior, and the spectrum of vibration of the measurement target portion 35 will contain various frequency components. The measurement apparatus 20 uses this property for highly accurate measurement of the adhesive strength at the measurement target portion 35.

(Second Embodiment)

In a case of irradiating the sample 30 with a laser and determining the adhesive strength at the measurement target portion 35 based on the reflected wave, as described above, the signal of interest is the reflected wave from the adhesive interface, whereas the reflected wave from the interface between the air and the adherend 31 is noise and is preferably eliminated insofar as possible. Therefore, the measurement apparatus 20 may cause p-polarized light to be incident on the adherend 31 at Brewster's angle. FIG. 3 is a diagram schematically illustrating the reflection of the laser outputted from the measurement apparatus 20 in FIG. 1.

In FIG. 3, the optical part 10 of the measurement apparatus 20 irradiates a p-polarized laser through an aperture 101a and receives a reflected wave at an aperture 101b. The measurement apparatus 20 may, for example, irradiate a p-polarized laser by providing a polarization filter at the aperture 101a. The aperture 101a is adjusted so that the irradiated laser forms Brewster's angle $\theta_B$ with the surface of the adherend 31. Brewster's angle $\theta_B$ is determined based on the refractive index of the adherend 31.

The measurement apparatus 20 can thus make the reflected wave from the interface between the air and the adherend 31 zero by irradiating a p-polarized laser toward the adherend 31 at Brewster's angle $\theta_B$. The measurement apparatus can therefore eliminate the reflected waves that are noise and can measure the adhesive strength of the measurement target portion 35 with high accuracy.

(Third Embodiment)

The intensity of the reflected wave may be increased by adding an additive, to the adhesive or the like forming the sample 30, to increase the reflectance of the laser. FIGS. 4A to 4C are diagrams schematically illustrating the relationship between the frequency of the laser outputted from the measurement apparatus 20 in FIG. 1 and the intensity of the reflected wave from the interface of the sample 30.

In a case in which the refractive indices of the adherend 31 and the adhesive 32 are close to each other, sufficient reflection intensity might not be obtained at the adhesive interface between the adherend 31 and the adhesive 32. Therefore, to obtain a reflected wave with higher intensity from the adhesive interface between the adherend 31 and the adhesive 32, an additive with high reflection intensity with respect to a frequency $f_1$ used in the laser to be irradiated may be added to the adhesive 32, as illustrated in FIG. 4A. This can increase the intensity of the reflected wave from the adhesive interface between the adherend 31 and the adhesive 32, enabling the measurement apparatus 20 to measure the adhesive strength with high accuracy. The offset frequency $f_{off}$ is omitted in FIGS. 4A to 4C. Similarly, to obtain high reflection intensity from the adhesive interface between the adhesive 32 and the adherend 33, an additive with high reflection intensity with respect to a frequency $f_2$ used in the laser to be irradiated may be added to the adherend 33, as illustrated in FIG. 4B. Metamaterials may be used as such additives that exhibit high reflection at specific frequencies $f_1$, $f_2$.

The measurement apparatus 20 may also use a laser of frequency $f_3$ that has high reflectance with respect to air to detect vibration of an air interface (void 37) as a specific foreign object present in the adhesive 32. Furthermore, the measurement apparatus 20 may include a plurality of laser light sources 7 capable of outputting lasers of such frequencies $f_1$, $f_2$, and $f_3$, and the laser light sources 7 may be switched to measure the reflected waves from the laser of each frequency. This makes it possible to select a specific type of interface inside the sample 30 as the measurement target portion 35 and to measure the adhesive strength thereof.

The vibrator 15 may use an ultrasonic phased array to provide a pinpoint vibration load to the site to be vibrated. This minimizes the influence of vibration generated at sites other than the measurement target portion 35. The measurement apparatus 20 can therefore measure the adhesive strength of a specific measurement target portion 35 with even higher accuracy.

As described above, in a case in which the complex refractive index of the adherend 31 and the adhesive 32 are close, and the interfacial reflection intensity of the measurement target portion 35 is low, the adhesive 32 may be provided with an additive designed to obtain a large reflection at the frequency of the laser to be irradiated. This will increase the intensity of the reflected wave obtained from the surface of the adhesive 32, enabling the measurement apparatus 20 to perform highly accurate measurements. The measurement apparatus 20 may include a plurality of types of laser light sources 7 that emit lasers, and the controller 13 may switch among these laser light sources 7. This enables the measurement apparatus 20 to measure, for example, the adhesive strength at the interface between the adherend 31 and the adhesive 32, the adhesive strength at the interface between the adhesive 32 and the adherend 33, and the presence of voids 37.

In each of the above embodiments, an example has been described in which the sample 30 that is the measurement target has a three-layer structure with the adherend 31, the adhesive 32, and the adherend 33, but as long as the sample 30 that is the measurement target has a plurality of layers, the sample 30 is not limited to such a three-layer structure. For example, the sample 30 may have a two-layer structure with two resins (for example, adherends 31, 33) mechanically bonded together. A sample 30 formed by a resin and a metal anchored together at the nano level, such as NMT® (NMT is a registered trademark in Japan, other countries, or both), may be taken as the measurement target, and the measurement apparatus 20 may use the method of each of the above embodiments to measure the adhesive strength of the anchor joints.

As described above, the controller 13 of the measurement apparatus 20 outputs an electromagnetic wave from the laser light source 7 toward a sample 30 that has a first layer (for example, the adherend 31) and a second layer (for example, the adhesive 32) adjacent to each other and is subjected to vibration at a predetermined vibration frequency by the vibrator 15. The controller 13 receives a reflected wave of the electromagnetic wave from a measurement target portion 35 at the interface between the first layer and the second layer and calculates a frequency or an amplitude of vibration of the measurement target portion 35 based on the reflected wave. The controller 13 measures the adhesive strength of the measurement target portion 35 based on the frequency or the amplitude of the vibration of the measurement target portion 35 calculated based on the reflected wave. In this way, the measurement apparatus 20 can measure the adhesive strength between layers with high accuracy, since the adhesive strength is measured by acquiring the frequency or amplitude of the vibration of the measurement target portion 35 while the degree of the adhesive strength at the interface is brought to light by the vibration.

The controller 13 may also measure the adhesive strength of the measurement target portion 35 based on a frequency spectrum of the vibration of the measurement target portion 35 in a frequency band that includes a different frequency than the vibration frequency. In a case in which the adhesive strength at the interface of a plurality of layers is not sufficient, the measurement target portion 35 will vibrate in an irregular and nonlinear manner due to factors such as a difference in the modulus of elasticity between the layers. As a result, the frequency spectrum of the vibration of the measurement target portion 35 is wider than the frequency of the vibrator 15. The controller 13 can therefore measure the adhesive strength of the measurement target portion 35 with even higher accuracy by referring to the frequency spectrum of the vibration of the measurement target portion 35 in a frequency band that includes a different frequency than the vibration frequency of the vibrator 15.

The controller 13 may also calculate the frequency or the amplitude of vibration of the measurement target portion 35 based on Doppler measurement. In this case, the effect of background noise can be reduced, and the measurement apparatus 20 can measure the adhesive strength of the measurement target portion 35 with even higher accuracy.

The controller 13 may also cause a p-polarized laser to be outputted from the laser light source 7 toward the sample 30 at Brewster's angle as the electromagnetic wave. This can exclude the effect of reflected waves from the surface of the sample 30, and the measurement apparatus 20 can measure the adhesive strength of the measurement target portion 35 with even higher accuracy.

The controller 13 may output the electromagnetic wave toward the sample 30 subjected to vibration at a first vibration frequency as the predetermined vibration frequency. The controller 13 may calculate a first frequency or a first amplitude, which is the frequency or the amplitude of vibration of the measurement target portion 35, based on the reflected wave of the electromagnetic wave from the measurement target portion 35 of the sample 30 subjected to vibration at the first vibration frequency. Furthermore, the controller 13 may output the electromagnetic wave toward the sample 30 subjected to vibration at a second vibration frequency as the predetermined vibration frequency. The controller 13 may calculate a second frequency or a second amplitude, which is the frequency or the amplitude of vibration of the measurement target portion 35, based on the reflected wave of the electromagnetic wave from the measurement target portion 35 of the sample 30 subjected to vibration at the second vibration frequency. The controller 13 may then measure the adhesive strength of the measurement target portion 35 based on at least one of the first frequency and the second frequency, and the first amplitude and the second amplitude. In this way, the measurement apparatus 20 may use the total of the frequency or amplitude of the reflected wave from the sample 30 subjected to vibration at the first vibration frequency and the frequency or amplitude of the reflected wave from the sample 30 subjected to vibration at the second vibration frequency. The measurement apparatus 20 can therefore measure the adhesive strength of the measurement target portion 35 with even higher accuracy.

The controller 13 may output an electromagnetic wave toward each measurement target portion 35 in a plurality of measurement target portions 35 at the interface between the first layer and the second layer and may receive a reflected wave of the electromagnetic wave from each measurement target portion 35 in the plurality of measurement target portions 35. The controller 13 may analyze, for each measurement target portion 35 in the plurality of measurement target portions 35, the reflected wave from the measurement target portion 35 to calculate a frequency or an amplitude of vibration of the measurement target portion 35. The controller 13 may measure, for each measurement target portion 35 in the plurality of measurement target portions 35, an adhesive strength of the measurement target portion 35 based on a comparison between the frequency or the amplitude of the vibration of the measurement target portion 35 and an average value of the frequency or the amplitude of the vibration of the plurality of measurement target portions 35. In this way, the measurement apparatus 20 measures the frequency or amplitude of the vibration of the plurality of measurement target portions 35 and measures the adhesive strength of a certain measurement target portion 35 based on a comparison with the frequency or the amplitude of the vibration of the plurality of measurement target portions 35. The measurement apparatus 20 can thereby further increase the measurement accuracy.

The controller 13 may output an electromagnetic wave of a first frequency $f_1$ from a first electromagnetic wave output source (laser light source 7) toward the sample 30, the second layer of the sample 30 being provided with an additive that increases reflectance of the electromagnetic wave of the first frequency $f_1$. This enables the measurement apparatus 20 to receive reflected waves with high reflection intensity from the second layer and to measure, with even higher accuracy, the adhesive strength of the measurement target portion 35 located at the interface between the first layer and the second layer.

The controller 13 may output an electromagnetic wave of a second frequency $f_2$ from a second electromagnetic wave output source toward the sample 30, the sample 30 further including a third layer (for example, the adherend 33) that is adjacent to the second layer and is provided with an additive that increases reflectance of the electromagnetic wave of the second frequency $f_2$. The controller 13 may receive a reflected wave of the electromagnetic wave of the second frequency $f_2$ from a measurement target portion 35 at the interface between the second layer and the third layer. The controller 13 may calculate a frequency or an amplitude of vibration of the measurement target portion 35 at the interface between the second layer and the third layer based on the reflected wave of the second frequency $f_2$. The controller 13 may measure an adhesive strength of the measurement target portion 35 at the interface between the second layer and the third layer based on the frequency or the amplitude of the vibration of the measurement target portion 35 at the interface between the second layer and the third layer. In this way, the measurement apparatus 20 may irradiate an electromagnetic wave of the second frequency $f_2$ toward the sample 30 that includes the third layer with an additive that increases the reflectance of the electromagnetic wave of the second frequency $f_2$. The measurement apparatus 20 may then measure the adhesive strength of the measurement target portion 35 at the interface between the second layer and the third layer based on the reflected wave. This enables the measurement apparatus 20 to receive reflected waves with high reflection intensity from the third layer and to measure, with high accuracy, the adhesive strength of the measurement target portion 35 located at the interface between the second layer and the third layer.

The controller 13 may output, from a third electromagnetic wave output source, an electromagnetic wave of a third frequency $f_3$ that is reflected by a specific foreign object (for example, the void 37), and determine that the specific foreign object is present in the sample 30 in response to reception of a reflected wave of the electromagnetic wave of the third frequency $f_3$ from the sample 30. The measurement apparatus 20 can therefore determine whether a foreign object is present in the sample 30.

The present disclosure is not limited to the above embodiments. For example, a plurality of blocks described in the block diagrams may be integrated, or a block may be divided. Instead of a plurality of steps described in the flowcharts being executed in chronological order in accordance with the description, the plurality of steps may be executed in parallel or in a different order according to the processing capability of the apparatus that executes each step, or as required. Other modifications can be made without departing from the spirit of the present disclosure.

REFERENCE SIGNS LIST

| | |
|---|---|
| 1a, 1b | Movable part |
| 2 | Lens |
| 3 | Mirror |
| 4a, 4b, 4c | Beam splitter |
| 5 | AOM |
| 6 | O/E converter |
| 7 | Laser light source |
| 8 | F/V converter |
| 9 | Frequency and amplitude calculator |
| 10 | Optical part |
| 11 | Electrical and electronic part |
| 12 | Measurement apparatus body |
| 13 | Controller |
| 14 | Data processor |
| 15 | Vibrator |
| 16 | Terminal |
| 20 | Measurement apparatus |
| 30 | Sample |
| 31, 33 | Adherend |
| 32 | Adhesive |
| 35 | Measurement target portion |
| 37 | Void |
| 100 | Measurement system |
| 101a, 101b | Aperture |

**Claims**

1. A measurement apparatus comprising a controller configured to:

    output an electromagnetic wave from an electromagnetic wave output source toward a sample that has a first layer and a second layer adjacent to each other and is subjected to vibration at a predetermined vibration frequency;
    receive a reflected wave of the electromagnetic wave from a measurement target portion at an interface between the first layer and the second layer;
    calculate a frequency or an amplitude of vibration of the measurement target portion based on the reflected wave; and
    measure an adhesive strength of the measurement target portion based on the frequency or the amplitude of vibration of the measurement target portion calculated based on the reflected wave.

2. The measurement apparatus according to claim 1, wherein the controller is configured to measure the adhesive strength of the measurement target portion based on a frequency spectrum of the vibration of the measurement target portion in a frequency band that includes a different frequency than the vibration frequency.

3. The measurement apparatus according to claim 1 or 2, wherein the controller is configured to calculate the frequency or the amplitude of vibration of the measurement target portion by performing a Doppler measurement of the reflected wave.

4. The measurement apparatus according to any one of claims 1 to 3, wherein the controller is configured to cause a p-polarized laser from a laser light source to be outputted toward the sample at Brewster's angle as the electromagnetic wave.

5. The measurement apparatus according to any one of claims 1 to 4, wherein the controller is configured to

output the electromagnetic wave toward the sample subjected to vibration at a first vibration frequency as the predetermined vibration frequency and calculate a first frequency or a first amplitude, which is the frequency or the amplitude of vibration of the measurement target portion, based on the reflected wave of the electromagnetic wave from the measurement target portion of the sample subjected to vibration at the first vibration frequency,
output the electromagnetic wave toward the sample subjected to vibration at a second vibration frequency as the predetermined vibration frequency and calculate a second frequency or a second amplitude, which is the frequency or the amplitude of vibration of the measurement target portion, based on the reflected wave of the electromagnetic wave from the measurement target portion of the sample subjected to vibration at the second vibration frequency, and
measure the adhesive strength of the measurement target portion based on at least one of the first frequency and the second frequency, and the first amplitude and the second amplitude.

6. The measurement apparatus according to any one of claims 1 to 5,

wherein there are a plurality of measurement target portions at the interface between the first layer and the second layer, and
wherein the controller is configured to
output an electromagnetic wave toward each measurement target portion in a plurality of measurement target portions at the interface between the first layer and the second layer,
receive a reflected wave of the electromagnetic wave from each measurement target portion in the plurality of measurement target portions,
analyze, for each measurement target portion in the plurality of measurement target portions, the reflected wave from the measurement target portion to calculate a frequency or an amplitude of vibration of the measurement target portion, and
measure, for each measurement target portion in the plurality of measurement target portions, an adhesive strength of the measurement target portion based on a comparison between the frequency or the amplitude of vibration of the measurement target portion and an average value of the frequency or the amplitude of vibration of the plurality of measurement target portions.

7. The measurement apparatus according to any one of claims 1 to 6, wherein the controller is configured to output an electromagnetic wave of a first frequency from a first electromagnetic wave output source toward the sample, the second layer of the sample being provided with an additive that increases reflectance of the electromagnetic wave of the first frequency.

8. The measurement apparatus according to any one of claims 1 to 7, wherein the controller is configured to

output an electromagnetic wave of a second frequency from a second electromagnetic wave output source toward the sample, the sample further comprising a third layer that is adjacent to the second layer and is provided with an additive that increases reflectance of the electromagnetic wave of the second frequency,
receive a reflected wave of the electromagnetic wave of the second frequency from a measurement target portion at an interface between the second layer and the third layer,
calculate a frequency or an amplitude of vibration of the measurement target portion at the interface between the second layer and the third layer based on the reflected wave of the second frequency, and
measure an adhesive strength of the measurement target portion at the interface between the second layer and the third layer based on the frequency or the amplitude of vibration of the measurement target portion at the interface between the second layer and the third layer.

9. The measurement apparatus according to any one of claims 1 to 8, wherein the controller is configured to

output, from a third electromagnetic wave output source, an electromagnetic wave of a third frequency that is reflected by a specific foreign object, and

determine that the specific foreign object is present in the sample in response to reception of a reflected wave of the electromagnetic wave of the third frequency from the sample.

**10.** A measurement method of a measurement apparatus, the measurement method comprising:

outputting, by a controller, an electromagnetic wave from an electromagnetic wave output source toward a sample that has a first layer and a second layer adjacent to each other and is subjected to vibration at a predetermined vibration frequency;

receiving, by the controller, a reflected wave of the electromagnetic wave from a measurement target portion at an interface between the first layer and the second layer;

calculating, by the controller, a frequency or an amplitude of vibration of the measurement target portion based on the reflected wave; and

measuring, by the controller, an adhesive strength of the measurement target portion based on the frequency or the amplitude of vibration of the measurement target portion calculated based on the reflected wave.

FIG. 1

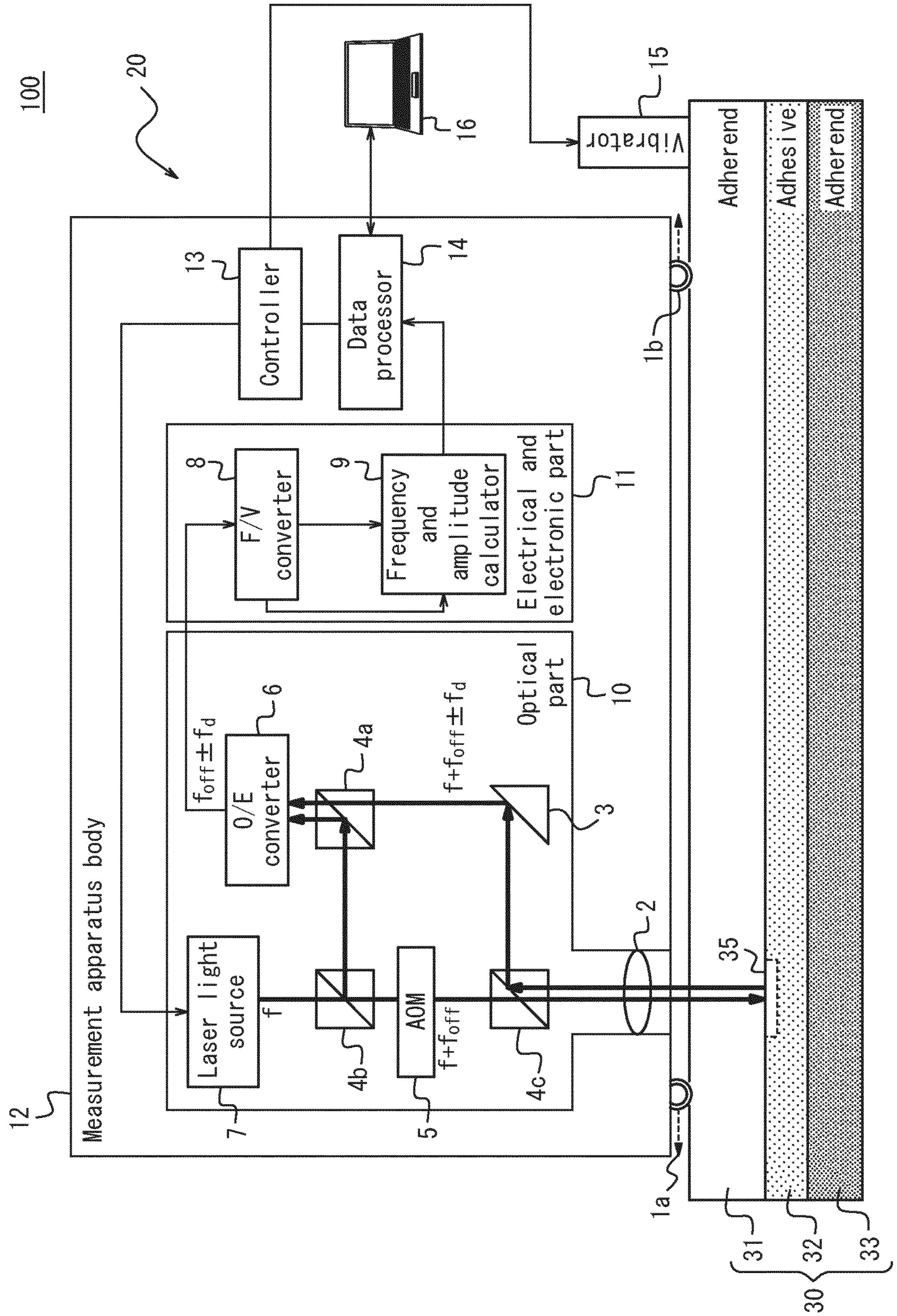

100
20
12
Measurement apparatus body
Laser light source
7
f
4b
AOM
5
f+f_off
4c
2
O/E converter
6
f_off±f_d
4a
f+f_off±f_d
3
Optical part
10
F/V converter
8
Frequency and amplitude calculator
9
Electrical and electronic part
11
Controller
13
Data processor
14
16
Vibrator
15
1a
1b
35
Adherend
Adhesive
Adherend
31
32
33
30

FIG. 2

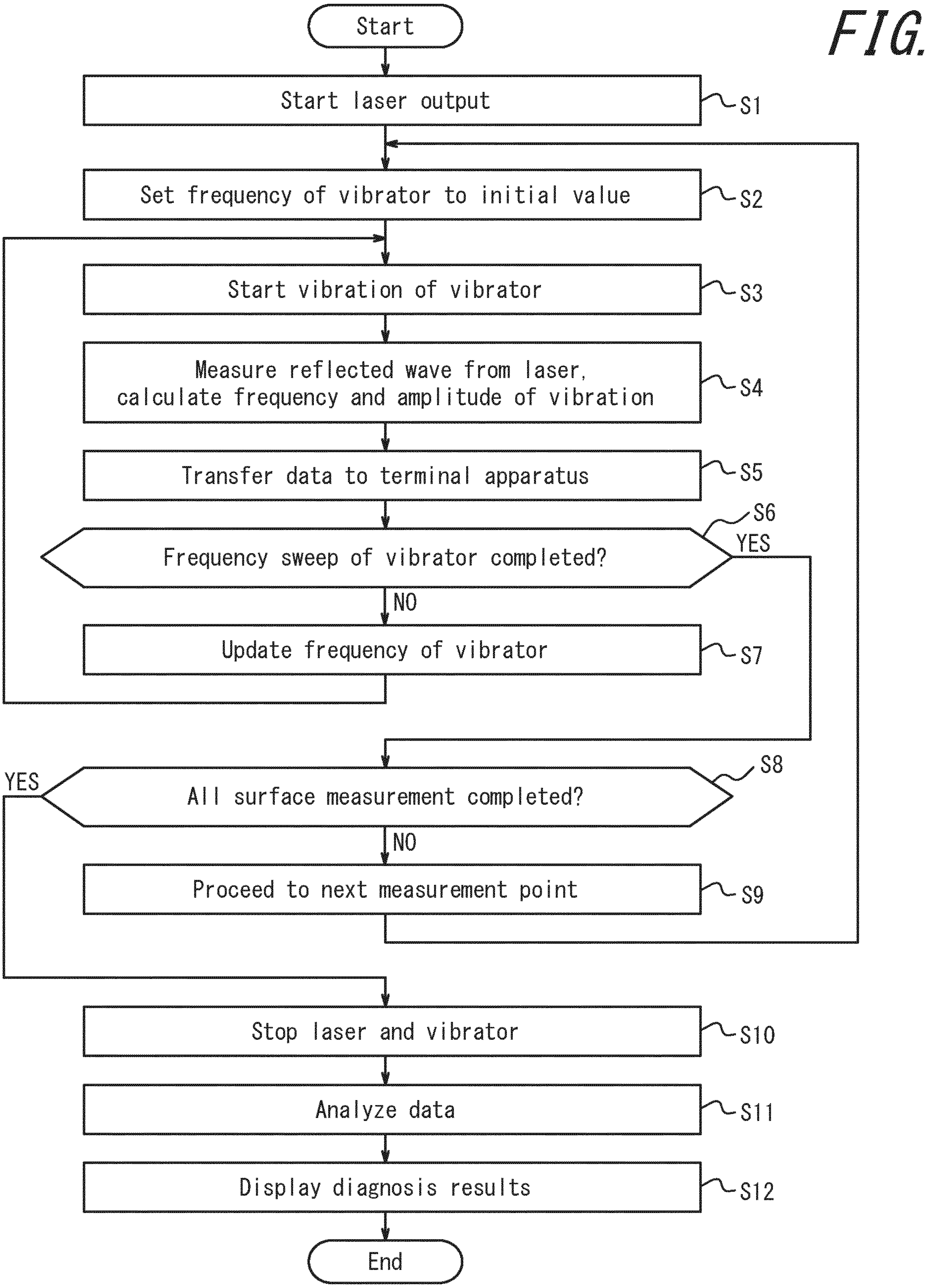
Start
Start laser output
S1
Set frequency of vibrator to initial value
S2
Start vibration of vibrator
S3
Measure reflected wave from laser,
calculate frequency and amplitude of vibration
S4
Transfer data to terminal apparatus
S5
S6
Frequency sweep of vibrator completed?
YES
NO
Update frequency of vibrator
S7
All surface measurement completed?
S8
YES
NO
Proceed to next measurement point
S9
Stop laser and vibrator
S10
Analyze data
S11
Display diagnosis results
S12
End

FIG. 3

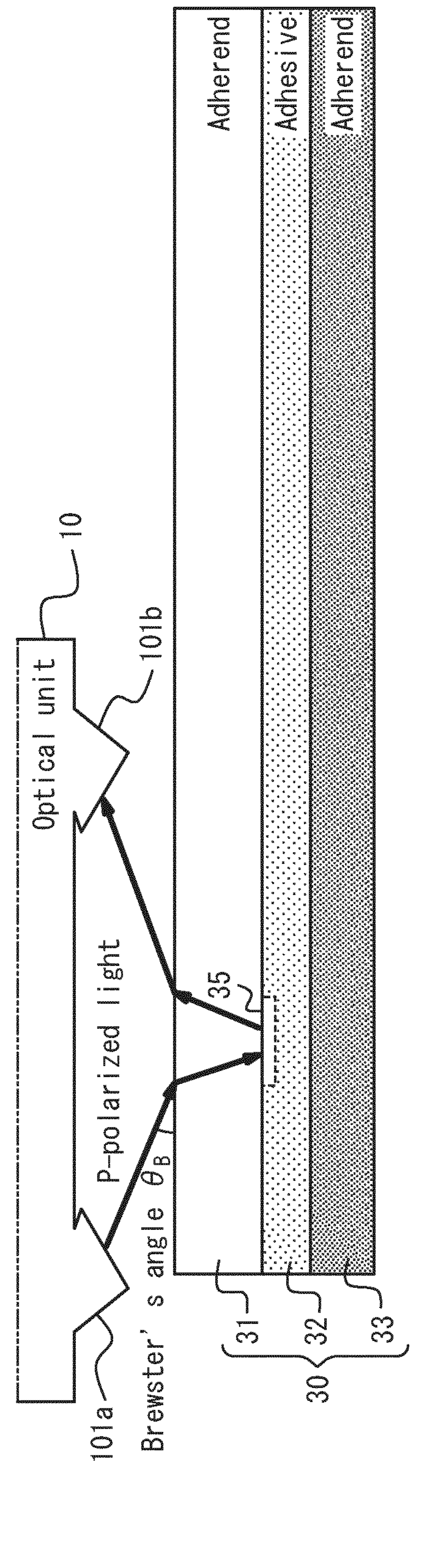
Adherend
Adhesive
Adherend
Optical unit
P-polarized light
Brewster's angle $\theta_B$
10
101a
101b
35
30
31
32
33

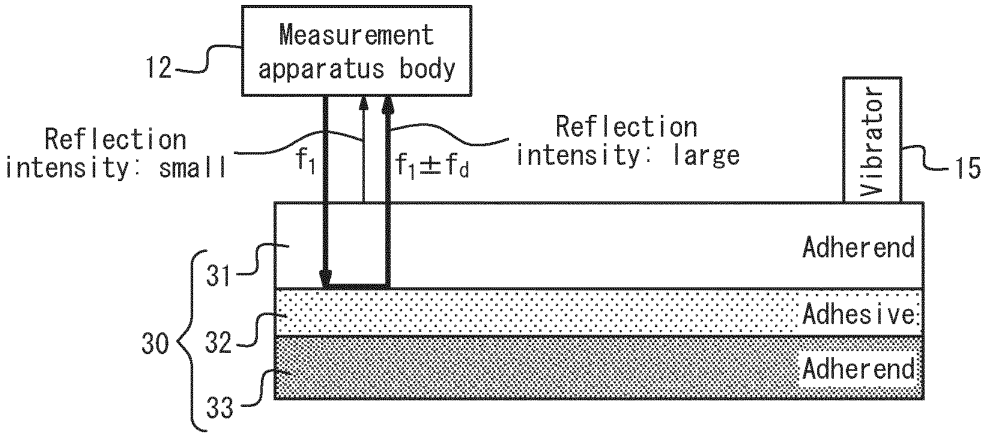


FIG. 4A

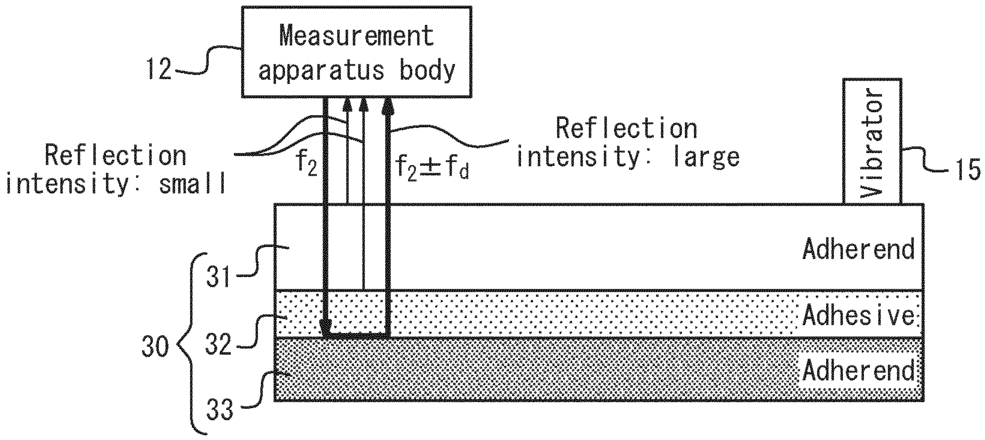


FIG. 4B

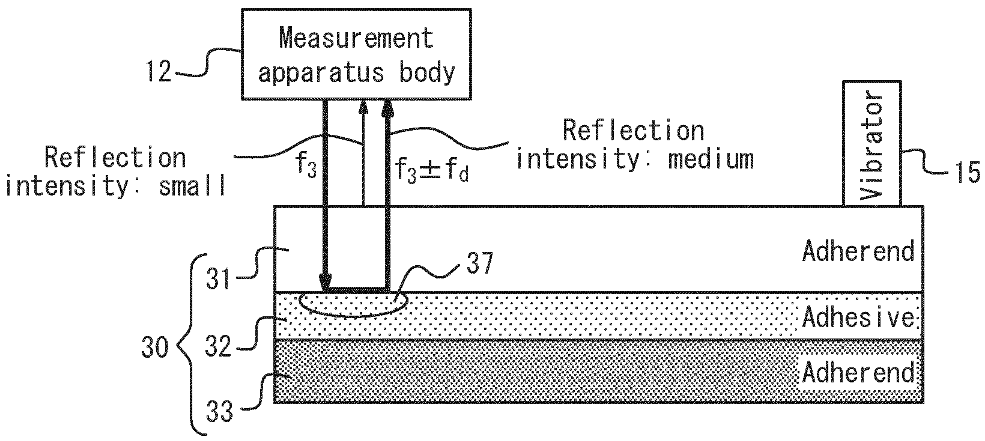


FIG. 4C

## INTERNATIONAL SEARCH REPORT

International application No.
**PCT/JP2022/041248**

**A. CLASSIFICATION OF SUBJECT MATTER**

***G01N 21/552***(2014.01)i; ***G01N 19/04***(2006.01)i; ***G01N 21/88***(2006.01)i
FI: G01N21/552; G01N19/04 Z; G01N21/88 H

According to International Patent Classification (IPC) or to both national classification and IPC

**B. FIELDS SEARCHED**

Minimum documentation searched (classification system followed by classification symbols)

G01N21/00-G01N21/01, G01N21/17-G01N21/61, G01N21/84-G01N21/958, G01B11/00-G01B11/30, G01N19/00-G01N19/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-176848 A (YOKOGAWA ELECTRIC CORP.) 29 October 2020 (2020-10-29) paragraphs [0022]-[0095], fig. 1-16 | 1-10 |
| A | JP 2013-507640 A (PICOMETRIX, LLC) 04 March 2013 (2013-03-04) paragraphs [0009]-[0056], fig. 1A-6 | 1-10 |
| A | US 2005/0023434 A1 (LER TECHNOLOGIES, INC.) 03 February 2005 (2005-02-03) paragraphs [0088]-[0109], fig. 15A-18 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2022** | **17 January 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/041248**

| Patent document cited in search report | Publication date (day/month/year) | Patent family member(s) | Publication date (day/month/year) |
|---|---|---|---|
| JP 2020-176848 A | 29 October 2020 | US 2022/0214275 A1<br>paragraphs [0039]-[0118], fig. 1-16<br>WO 2020/213350 A1<br>EP 3957980 A1<br>CN 113711010 A | |
| JP 2013-507640 A | 04 March 2013 | US 2012/0304756 A1<br>paragraphs [0015]-[0063], fig. 1A-6<br>WO 2011/047016 A1<br>EP 2488849 A1<br>CA 2777381 A<br>CN 102667442 A<br>KR 10-2012-0088742 A | |
| US 2005/0023434 A1 | 03 February 2005 | WO 2006/001842 A2<br>page 17, line 13 to page 21, line 25, fig. 15A-18 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021181510 A
- JP 5684819 B